# EUROPÄISCHE PATENTSCHRIFT

(11) **EP 3 455 020 B1**
(45) Veröffentlichungstag und Bekanntmachung des Hinweises auf die Patenterteilung: **28.07.2021**
(21) Anmeldenummer: 17717402.6
(22) Anmeldetag: 12.04.2017
(51) Int. Cl.: B23K 3/02

(54) **VERFAHREN ZUR HERSTELLUNG EINER SCHEIBE MIT EINEM ELEKTRISCHEN ANSCHLUSSELEMENT**
METHOD OF MANUFACTURING A PANE WITH A CONTACT ELEMENT
MÉTHODE DE FABRICATION D'UNE VITRE AVEC UN ÉLÉMENT DE CONTACT

(30) Priorität: 10.05.2016 EP 16168832
(43) Veröffentlichungstag der Anmeldung: 20.03.2019
(73) Patentinhaber: SAINT-GOBAIN GLASS FRANCE, 92400 Courbevoie (FR)
(72) Erfinder: PAGEL, Bruno, 52457 Aldenhoven (DE); WERNER, Katja, 52152 Simmerath (DE); LESMEISTER, Lothar, 6373 Landgraaf (NL); KABADAYI, Fahri, 52146 Würselen (DE)
(74) Vertreter: Lendvai, Tomas
(86) Internationale Anmeldenummer: PCT/EP2017/058799
(87) Internationale Veröffentlichungsnummer: WO 2017/194261

(56) Entgegenhaltungen:
- WO-A1-2013/182394
- DE-U- 7 739 300
- FR-A5- 2 094 356
- US-A- 4 500 027

## Beschreibung

Die Erfindung betrifft ein Verfahren zur Herstellung einer Scheibe mit einem elektrischen Anschlusselement unter Verwendung eines Lötkolbens mit einer Lötspitze.

Fensterscheiben, insbesondere Fahrzeugscheiben sind häufig mit elektrisch leitfähigen Strukturen ausgestattet. Beispiele solcher leitfähiger Strukturen sind aufgedruckte Heizleiter oder Antennen. Zum Anschluss an die erforderliche Spannungsquelle oder Sende- oder Empfangseinheit sind typischerweise elektrische Anschlusselemente auf einen Bereich der leitfähigen Struktur gelötet, die mit einem elektrischen Anschlusskabel verbunden oder verbindbar sind.

Es ist eine Vielzahl verschiedener Arten von Anschlusselementen bekannt. US 6249966 B1, US 2007/0224842 A1 und WO2013/182394 A1 offenbaren Anschlusselemente, die als Druckknopf ausgebildet sind. Diese Anschlusselemente haben den Vorteil einer bequemen und reversiblen Verbindung mit dem Anschlusskabel. Typischerweise ist der männliche Druckknopf auf der Scheibe angelötet und der weibliche Druckknopf mit dem Anschlusskabel versehen. Männlicher und weiblicher Druckknopf können einfach bestimmungsgemäß miteinander verbunden werden, um die elektrische Kontaktierung herzustellen. WO2013/182394 A1 offenbart zudem ein Verfahren zur Herstellung einer Scheibe mit einem elektrischen Anschlusselement, wobei eine elektrisch leitfähige Struktur auf einem Substrat aufgebracht wird, ein Anschlusselement mit einer Lotmasse auf der elektrisch leitfähigen Struktur angeordnet wird und das Anschlusselement mit der elektrisch leitfähigen Struktur verlötet wird. Der Oberbegriff des Anspruchs 1 basiert auf WO2013/182394 A1.

WO 2014/040773 A1 offenbart ein um das Anschlusskabel gecrimptes Anschlusselement, wobei der Crimp direkt auf die leitfähige Struktur gelötet ist.

Das Anlöten der Anschlusselemente kann automatisiert erfolgen mittels Lötrobotern. Alternativ können die Anschlusselemente aber auch manuell verlötet werden, was insbesondere in Niedriglohnländern und bei kleineren Stückzahlen wirtschaftlich interessant ist. Beim Handlöten kommen regelbare oder nicht regelbare Lötkolben zum Einsatz, die typischerweise mit auswechselbaren Lötspitzen ausgestattet sind. Die Lötspitze wird mit dem Anschlusselement in Kontakt gebracht, woraufhin sie die durch den Lötkolben erzeugte Wärme über das Anschlusselement auf die Lotmasse überträgt, welche dadurch aufgeschmolzen wird. Lötspitzen müssen dazu eine hohe thermische Leitfähigkeit besitzen und sind typischerweise aus Kupfer gefertigt. Gebräuchliche Lötspitzen sind meiselartig ausgebildet mit einem länglichen, spitz zulaufenden Endabschnitt zur Kontaktierung des Anschlusselements. Daneben sind Stabelektroden als Lötspitzen gebräuchlich mit einem flachen Endabschnitt zur Kontaktierung des Anschlusselements.

Beim Handlöten muss darauf geachtet werden, dass die Lötspitze einen guten und möglichst großflächigen Kontakt zum Anschlusselement aufweist, um einen effizienten Energieeintrag zu gewährleisten. Dies stellt hohe Anforderungen an das sorgsame Arbeiten des Technikers. Zudem ist es beim Handlöten oftmals erforderlich, das Anschlusselement eigens zu fixieren, um seine stabile Positionierung zu gewährleisten. Grund hierfür ist die lokal sehr begrenzte Einleitung von Energie mit herkömmlichen Lötspitzen, die einen sehr hohen Energieeintrag erfordern, um das gesamte Lot aufzuschmelzen. Die Lotmasse muss daher stark erhitzt werden und verfestigt sich in der Folge nur recht langsam, so dass das Anschlusselement gleichsam auf der Lotmasse aufschwimmt und seine Position verändern kann.

Der vorliegenden Erfindung liegt die Aufgabe zugrunde, ein mit einer verbesserten Lötspitze für einen Lötkolben, insbesondere Handlötkolben, ausgeführtes verbessertes Verfahren zur Herstellung einer Scheibe mit elektrischem Anschlusselement bereitzustellen. Die Lötspitze soll insbesondere einen homogeneren Energieeintrag gewährleisten, ein bequemeres Löten ermöglichen sowie eine separate Fixierung des Anschlusselements während des Lötvorgangs verzichtbar machen.

Die Aufgabe wird erfindungsgemäß durch ein Verfahren gemäß dem unabhängigen Anspruch 1 gelöst. Bevorzugte Ausführungen gehen aus den Unteransprüchen hervor.

Die verbesserte Lötspitze für einen Lötkolben ist zum Anlöten eines elektrischen Anschlusselements auf eine elektrisch leitfähige Struktur auf einem Substrat vorgesehen, insbesondere auf einer Fensterscheibe aus Glas. Die Lötspitze umfasst einen Endabschnitt am vom Lötkolben abgewandten Ende der Lötspitze, der zur Kontaktierung mit dem Lötgut, insbesondere dem Anschlusselement, während des Lötvorgangs vorgesehen ist.

Erfindungsgemäß ist der besagte Endabschnitt im Wesentlichen halbkugelförmig ausgebildet. Dies ermöglicht ein effizientes und vereinfachtes manuelles Löten geeigneter Anschlusselemente, insbesondere Anschlusselemente mit einer zentralen Vertiefung. Der Endabschnitt in Form einer Halbkugel kann in die Vertiefung eingeführt werden, so dass ein großflächiger Bereich des Anschlusselements, nämlich der die Vertiefung umgebende Bereich, reproduzierbar mit der Lotspitze in Kontakt gebracht werden kann. So wird ein effizienter und homogener Energieeintrag erreicht, was zu einem gleichmäßigen Aufschmelzen der Lotmasse führt. Die Halbkugelform des Endabschnitts der Lötspitze vereinfacht das Löten zudem, weil weniger Sorgfalt hinsichtlich der Haltung des Lötkolbens erforderlich. Der Lötkolben kann senkrecht zum Substrat gehalten werden oder auch schräg - die Halbkugelform gewährleistet einen reproduzierbaren Kontaktbereich zwischen Lötspitze und Anschlusselement.

Der Lötkolben ist mit Heizmitteln ausgestattet, um die Lötspitze zu erhitzen. Die Temperatur wird von der Lötspitze auf die Lotmasse übertragen, welche dadurch aufgeschmolzen wird. Diese Art des Lötkolbens werden im Fachjargon auch als "Hot Iron" bezeichnet.

Der besagte Lötkolben ist vorteilhafterweise ein Handlötkolben. Die verbesserte Lötspitze zeigt ihre Vorteile insbesondere beim manuellen Löten. Hier ist die genaue Haltung des Lötkolbens nicht völlig reproduzierbar, was durch den vom Anstellwinkel unabhängigen Kontaktbereich zwischen Lötspitze und Anschlusselement kompensiert wird. Demgegenüber erfordert die Lötspitze aber eine sehr genaue lokale Positionierung zum Anschlusselement, um den Kontaktbereich vollständig zu kontaktieren. Toleranzen hinsichtlich der Positionierung des Anschlusselements können beim manuellen Löten leicht ausgeglichen wird, so dass die Lötspitze sehr einfach mit der erforderlichen Genauigkeit relativ zum Anschlusselement positioniert werden kann. Beim automatisierten Löten ist die Position der Lotspitze in der Regel nicht veränderlich, so dass die erforderliche Anpassung an die genaue Position des Anschlusselements im Rahmen der Fertigungstoleranzen weniger einfach möglich ist.

Die Lötspitze ist bevorzugt eine auswechselbare Lötspitze für einen Lötkolben. Eine solche Lötspitze kann gedanklich in drei Abschnitte aufgeteilt werden:
- einen Endabschnitt zur Kontaktierung des Lötgutes,
- einen Anschlussabschnitt zur Verbindung der Lötspitze mit dem Lötkolben,
- einen Mittelabschnitt, der sich zwischen dem Endabschnitt und dem Anschlussabschnitt erstreckt.

Die Gestaltung des Anschlussabschnitts wird im Wesentlichen durch die Art des Lötkolbens festgelegt, mit dem die Lötspitze verwendet werden soll und daher kompatibel sein muss. Grundsätzlich sind viele Verbindungssysteme denkbar. Beispiele hierfür sind Steckverbindungen, bei denen der Endabschnitt in ein Loch des Lötkolbens eingesteckt wird und dort beispielsweise mittels eines Magneten fixiert wird, Bajonettverbindungen und Schraubverbindungen, bei denen der Endabschnitt mit einem Gewinde versehen ist oder mit Löchern, durch die Befestigungsschrauben geführt werden können.

In einer bevorzugten Ausgestaltung ist der Anschlussabschnitt gegenüber dem Mittelabschnitt verbreitert, so dass die Lötspitze mittels einer Überwurfmutter an dem Lötkolben befestigt werden kann. Die Überwurfmutter wird auf den Lötkolben aufgeschraubt, der dazu natürlich mit einem Gewinde versehen sein muss, und drückt den verbreiterten Anschlussabschnitt an den Lötkolben an, wodurch die Lötspitze sicher fixiert wird. Der Anschlussabschnitt weist bevorzugt eine plane Anschlussfläche auf der vom Mittelabschnitt abgewandten Seite auf, die mit einer entsprechenden planen Anschlussfläche des Lötkolbens in Kontakt gebracht wird. Die Anschlussflächen des Anschlussabschnitts der Lötspitze und des Lötkolbens sind bevorzugt kongruent und werden in Deckung angeordnet. Bei Verwendung einer geeigneten Überwurfmutter ist es aber grundsätzlich auch möglich, die Anschlussfläche der Lötspitze kleiner als die Anschlussfläche des Lötkolbens zu gestalten. Die Verbreiterung des Anschlussabschnitts gegenüber dem Mittelabschnitt beträgt bevorzugt mindestens 1 mm, besonders bevorzugt mindestens 2 mm, um eine stabile Anbindung an den Lötkolben zu gewährleisten.

In einer weiteren bevorzugten Ausgestaltung ist der Endabschnitt der Lötspitze zum Einführen (Einstecken) in den Lötkolben geeignet. Die Lötspitze kann im Lötkolben beispielsweise mit einer seitlich eingeführten Schraube fixiert werden. Der Endabschnitt weist in einer bevorzugten Ausgestaltung die gleiche Breite wie der Mittelabschnitt auf.

Der Mittelabschnitt ist bevorzugt in Form eines senkrechten Kreiszylinders ausgebildet, weil diese Form zum einen für Lötspitzen üblich ist und zum anderen der Querschnitt des Mittelabschnitts dem Querschnitt des halbkugelförmigen Endabschnitts entspricht, wodurch die Formen optimal aufeinander abgestimmt sind, insbesondere wenn der Kreiszylinder den gleichen Radius aufweist wie der halbkugelförmige Endabschnitt. Prinzipiell sind aber auch andere Formen des Mittelabschnitts denkbar, beispielsweise mit quadratischem, rechteckigem, dreieckigem oder polygonalem Querschnitt.

Der Mittelabschnitt kann gerade sein oder auch abgewinkelt.

Die Lötspitze sollte eine hohe thermische Leitfähigkeit aufweisen. Die Lötspitze enthält bevorzugt Kupfer und ist besonders bevorzugt aus Kupfer gefertigt oder aus einer kupferhaltigen Legierung, wie Messing- oder Bronze-Legierungen, beispielsweise Neusilber oder Konstantan. Kupfer weist eine hohe Leitfähigkeit und vergleichsweise kostengünstig. Prinzipiell sind aber auch andere Metalle oder Legierungen als Material für die Lötspitze geeignet.

Die Lötspitze kann mit einer Beschichtung versehen sein, um ihre Eigenschaften zu optimieren. Dadurch kommt nicht das Kernmaterial der Lötspitze, bevorzugt Kupfer, mit dem Lötgut in Kontakt, sondern die Beschichtung, die daher auch als Kontaktschicht oder Benetzungsschicht bezeichnet werden kann. Die Kontaktschicht bildet die äußere Oberfläche der Lötspitze aus.

In einer vorteilhaften Ausgestaltung ist die Lötspitze vernickelt, weist also eine Kontaktschicht auf Basis von Nickel auf, bevorzugt bestehend aus Nickel. Die Nickel-Kontaktbeschichtung bremst den Wärmeübertrag von der Lötspitze auf das Lötgut. Dadurch kann ein Verzundern der Lötspitze vermieden werden, was insbesondere bei Verwendung von Kupfer auftreten kann. Die Dicke der Nickelschicht beträgt bevorzugt von 5 µm bis 30 µm, besonders bevorzugt von 10 µm bis 15 µm.

In einer alternativen Ausgestaltung ist die Lötspitze hartverchromt. Unter einer Hartverchromung wird im Sinne der Erfindung eine Kontaktschicht auf Basis von Chrom, bevorzugt aus Chrom bezeichnet mit einer Dicke von mindestens 1 µm. Die Chrom-Kontaktschicht weist bevorzugt eine Schichtdicke von 10 µm bis 80 µm, besonders bevorzugt von 20 µm bis 50 µm auf. Unterhalb der Chrom-Kontaktschicht kann einer weitere Schicht angeordnet sein, beispielsweise eine Nickelschicht mit einer Dicke von 5 µm bis 15 µm. Die Hartverchromung steigert die Oberflächenhärte und insbesondere die Oberflächenspannung der Lötspitze so, dass ein unerwünschtes Benetzten der Lötspitze mit unkontrolliert austretender Lotmasse verhindert wird.

Die geometrischen Maße der Lötspitze insbesondere von der Bauart des verwendeten Lötkolbens und der gewünschten Lötspitzentemperatur ab und können vom Fachmann nach den Erfordernissen des Einsatzzwecks geeignet gewählt werden. Die Gesamtlänge der Lötspitze beträgt beispielsweise von 10 mm bis 120 mm, bevorzugt von 15 mm bis 90 mm, insbesondere von 15 bis 60 mm. Eine solche Lötspitze ist gut zu handhaben und wird auch im Endabschnitt ausreichend schnell und effizient erhitzt.

Der Radius des halbkugelförmigen Endabschnitts (entspricht auch der Länge und Breite des Endabschnitts) beträgt beispielsweise von 1 mm bis 20 mm, bevorzugt von 3 mm bis 15 mm, besonders bevorzugt von 4 mm bis 10 mm. Die Breite des Mittelabschnitts liegt bevorzugt in den gleichen Bereichen und ist besonders bevorzugt gleich dem Radius des Endabschnitts. Die Länge des Mittelabschnitts ist grundsätzlich lediglich durch die Handhabbarkeit und die thermische Leitfähigkeit des Lötspitzenmaterials beschränkt. Sie beträgt beispielsweise von 1 mm bis 100 mm, bevorzugt von 5 mm bis 80 mm. Die Breite des Anschlussabschnitts ist abhängig vom verwendeten Lötkolben und beträgt beispielsweise von 1 mm bis 30 mm, bevorzugt von 4 mm bis 20 mm. In einer vorteilhaften Ausgestaltung entspricht die Breite des Anschlussabschnitts der Breite Anschlussfläche des Lötkolbens. Die Länge des Anschlussabschnitts beträgt bevorzugt von 1 mm bis 10 mm, insbesondere von 1 mm bis 5 mm in der flanschartigen Anschlussvariante mit verbreitertem Anschlussabschnitt. Die Länge des Anschlussabschnitts beträgt bevorzugt von 10 mm bis 100 mm, insbesondere von 20 mm bis 80 mm in der Anschlussvariante mit einzusteckendem Anschlussabschnitt.

Die verbesserte Lötspitze ist geeignet für einen Lötkolben, insbesondere Handlötkolben, der mit einer Spannungsquelle verbindbar ist. Die verbesserte Lötspitze ist insbesondere auch geeignet für eine Lötstation, umfassend einen mit der verbesserten Lötspitze ausgestatteten Lötkolben und eine mit diesem über ein Kabel verbundene Steuerungseinheit, die mit einer Spannungsquelle verbindbar ist.

Das erfindungsgemäße Verfahren zur Herstellung einer Scheibe mit einem elektrischen Anschlusselement, umfasst die folgenden Schritte
(a) Bereitstellen eines Substrats,
(b) Aufbringen einer elektrisch leitfähigen Struktur auf einen Bereich des Substrats,
(c) Anordnen einer Lotmasse auf einem Bereich der elektrisch leitfähigen Struktur und eines elektrischen Anschlusselements auf der Lotmasse,
(d) Anlöten des Anschlusselements mit einem Lötkolben mit der verbesserten Lötspitze.

Der Lötkolben ist insbesondere ein Handlötkolben, mit dem das Anschlusselement manuell angelötet wird.

Ein großer Vorteil der verbesserten Lötspitze besteht in einem sehr homogenen Energieeintrag, der durch die verlässliche Kontaktierung der die Vertiefung umgebenden Bereiche des Anschlusselements gewährleistet wird. Dies hat zur Folge, dass insgesamt ein geringerer Energieeintrag nötig ist, um die gesamte Lotmasse aufzuschmelzen. Die Lotmasse hat dadurch eine geringe Temperatur und kühlt schneller auf Verfestigungstemperatur ab. Ein Verschieben des Anschlusselements auf der flüssigen Lotmasse kann dadurch vermieden werden, weshalb keine zusätzlichen Maßnahmen zur Fixierung des Anschlusselements getroffen werden müssen, die bei herkömmlichen Lötverfahren notwendig sind, beispielsweise Festklemmen oder Festkleben. In einer bevorzugten Ausführung wird auf solche zusätzlichen Fixierungsmaßnahmen verzichtet und es werden außer dem Anpressdruck der Lötspitze keine weiteren Maßnahmen zur Fixierung des Anschlusselements getroffen. Das Lötverfahren kann dadurch deutlich vereinfacht und daher wirtschaftlicher gestaltet werden. Außerdem können sogenannte "kalte Lötstellen" vermieden werden ohne hinreichende Verbindung zwischen den Materialien.

Die hergestellte Scheibe ist bevorzugt eine Glasscheibe, besonders bevorzugt Fensterscheibe, insbesondere Fahrzeugscheibe.

Das Anschlusselement muss auch mit einem Anschlusskabel verbunden werden, was vor, während oder nach dem erfindungsgemäßen Verfahren erfolgen kann. Das Anschlusskabel ist dafür vorgesehen, die elektrisch leitfähige Struktur mit einem externen Funktionselement, beispielsweise einer Spannungsversorgung oder einem Empfangsgerät, elektrisch zu verbinden. Dazu ist das Anschlusskabel ausgehend vom Anschlusselement bevorzugt über die Seitenkanten der Scheibe hinweg von der Scheibe weggeführt. Das Anschlusskabel kann prinzipiell jedes Anschlusskabel sein, das dem Fachmann zur elektrischen Kontaktierung einer elektrisch leitfähigen Struktur bekannt ist. Das Anschlusskabel kann neben einem elektrisch leitfähigen Kern (Innenleiter) eine isolierende, bevorzugt polymere Ummantelung umfassen, wobei die isolierende Ummantelung bevorzugt im Endbereich des Anschlusskabels entfernt ist, um eine elektrisch leitende Verbindung zwischen Anschlusselement und Innenleiter zu ermöglichen.

Das Substrat enthält bevorzugt Glas, besonders bevorzugt Kalk-Natron-Glas, wie es für Fensterscheiben üblich ist. Das Substrat kann grundsätzlich aber auch andere Glasarten enthalten, beispielsweise Quarzglas oder Borsilikatglas, oder Polymere, insbesondere transparente Polymere, beispielsweise Polycarbonat oder Polymethylmethacrylat.

Das Substrat ist bevorzugt transparent oder transluzent. Das Substrat weist bevorzugt eine Dicke von 0,5 mm bis 25 mm, besonders bevorzugt von 1 mm bis 10 mm und ganz besonders bevorzugt von 1,5 mm bis 5 mm auf.

Die elektrisch leitfähige Struktur ist in einer bevorzugten Ausgestaltung als eingebrannte Druckpaste ausgebildet. Die Druckpaste enthält bevorzugt metallische Partikel, insbesondere Silberpartikel, und Glasfritten. Die Druckpaste kann durch verschiedene Druckverfahren, bevorzugt Siebdruck, in der gewünschten Form auf das Substrat aufgebracht und dort eingebrannt werden. Aufgedruckte leitfähige Strukturen sind im Bereich der Fahrzeugverglasungen üblich, beispielsweise als Heizleiter oder Antennen oder Stromsammelschienen (*Busbars*). Eine Stromsammelschiene steht mit einer weiteren leitfähigen Struktur, beispielsweise einer transparenten Heizbeschichtung, Heizleitern oder Dünnschicht-Flächenelektroden, in Kontakt und ist dafür vorgesehen, diese mit elektrischem Strom zu versorgen oder Strom aus ihr abzuführen. Die Schichtdicke der gedruckten Struktur beträgt bevorzugt von 5 µm bis 40 µm.

Die elektrisch leitfähige Struktur ist in einer alternativen Ausgestaltung als elektrisch leitfähige Folie ausgebildet, bevorzugt als Kupferfolie oder kupferhaltige Folie. Leitfähige Strukturen in Form von Folienstreifen sind im Bereich der Fahrzeug- und Architekturverglasungen, aber auch im Bereich der Photovoltaik insbesondere als Stromsammelschienen üblich, oder auch als sogenannte Folienleiter oder Flachleiter. Typischerweise werden Heizdrähte, transparente Heizbeschichtungen oder Dünnschicht-Flächenelektroden mittels Folien elektrisch kontaktiert. Die Folie kann mit einer Beschichtung versehen sein, beispielsweise versilbert oder verzinnt sein. Die Folie weist bevorzugt eine Dicke von 10 µm bis 500 µm auf, besonders bevorzugt von 30 µm bis 200 µm.

Die verbesserte Lötspitze entfaltet ihre Vorteile insbesondere beim Anlöten bestimmter Anschlusselemente. Diesen Anschlusselementen ist gemeinsam, dass sie eine zentrale Vertiefung aufweisen. Damit ist eine Vertiefung gemeint auf der vom Substrat abgewandten Seite des Anschlusselements, die in Draufsicht etwa mittig angeordnet ist. Die Vertiefung kann sich von der Mitte aus auch zu Seitenkanten, beispielsweise zwei gegenüberliegenden Seitenkanten, des Anschlusselements erstrecken.

Die Vertiefung ist von demgegenüber erhöhten Bereichen des Anschlusselements umgeben, entweder umlaufend vollständig oder nur teilweise, wobei beispielsweise die erhöhten Teile an zwei gegenüberliegende Seiten der Vertiefung angrenzen. In jedem Fall grenzen erhöhte Teile oder Abschnitte oder Bereiche des Anschlusselements an die zentrale Vertiefung an. Der halbkugelförmige Endabschnitt kann teilweise in die Vertiefung eingeführt werden. Damit ist gemeint, dass ein Bereich des Endabschnitts in die Vertiefung eingeführt wird, während der restliche Bereich des Endabschnitts außerhalb der Vertiefung verbleibt. Die Lötspitze wird so mit den die Vertiefung umgebenden, erhöhten Teilen des Anschlusselements in Kontakt gebracht. Dazu muss die Breite der Lötspitze natürlich größer sein als die laterale Ausdehnung der Vertiefung, um die umgebenden Teile berühren zu können. Außerdem muss die Vertiefung eine Mindesttiefe aufweisen, damit der Endabschnitt ausreichend in die Vertiefung eingeführt werden kann und nicht auf den Boden der Vertiefung stößt, bevor die erhöhten Bereiche des Anschlusselements kontaktiert werden. Die Mindesttiefe ist abhängig vom Radius des Endabschnitts der Lötspitze. Die erforderliche Mindesttiefe kann vom Fachmann im Sinne der Erfindung einfach bestimmt werden. Der Fachmann kann die Lötspitze dementsprechend gemäß den zu verlötenden Anschlusselementen wählen oder umgekehrt die Anschlusselemente in Abhängigkeit von der Lötspitze gestalten.

Durch die Ausgestaltung des Endabschnitts der Lötspitze als Halbkugel werden die die Vertiefung umgebenden Teile des Anschlusselements immer zuverlässig kontaktiert, unabhängig vom Winkel, in dem der Lötkolben zum Substrat gehalten wird. Dies ist insbesondere bei Handlötungen vorteilhaft, wo naturgemäß erhebliche Toleranzen hinsichtlich dieses Winkels vorliegen.

In einer bevorzugten Ausgestaltung ist das Anschlusselement als männlicher Druckknopf ausgebildet. Ein solcher männlicher Druckkopf weist eine zentrale Vertiefung auf, die von einem erhöhten Bereich umlaufend, typischerweise vollständig umgeben wird. Die Vertiefung und der umgebende Bereich sind typischerweise in Draufsicht rund ausgebildet, es sind aber grundsätzlich auch andere Formen vorstellbar. Ebenso ist es möglich, dass der umgebende erhöhte Bereich unterbrochen ist.

Die Ausbildung des Anschlusselements als Druckknopf ermöglicht einen bequemen Anschluss des leitfähigen Struktur an die Elektrik am Einsatzort: das erforderliche Verbindungskabel kann mit dem komplementären weiblichen Druckknopf verbunden werden, welcher dann am Einsatzort einfach auf den männlichen Druckknopf aufgesteckt werden kann.

In einer weiteren bevorzugten Ausgestaltung ist das Anschlusselement als B-Crimp um das Anschlusskabel ausgebildet. Das Anschlusselement ist typischerweise ein Metallstreifen oder -blättchen, welches um das Anschlusskabel gecrimpt ist. Eine Crimpverbindung ist einfach, kostengünstig und schnell herzustellen und leicht automatisierbar. Aufwendige zusätzliche Prozessschritte, beispielsweise das Verlöten oder Verschweißen des Anschlusselements mit dem Anschlusskabel können vermieden werden. Gleichzeitig wird eine sehr stabile Verbindung zwischen Anschlusselement und Anschlusskabel bereitgestellt.

Der gecrimpte Bereich des Anschlusselements (der sogenannte Crimp, also der durch den Crimpvorgang verformte Bereich) wird direkt mit der elektrisch leitfähigen Struktur verlötet. Damit unterscheidet sich das Anschlusselement von solchen, die ebenfalls durch Crimpen mit dem Anschlusskabel verbunden sind, aber neben dem Crimp einen weiteren, an diesen angeschlossenen Abschnitt umfassen, der eigens zum Verlöten vorgesehen ist. Durch die Ausgestaltung des Anschlusselements insgesamt als Crimp kann das Anschlusselement mit vorteilhaft kleinen Abmessungen ausgestaltet werden, wodurch der Platzbedarf der elektrischen Kontaktierung verringert wird.

In einer vorteilhaften Ausgestaltung ist das Anschlusselement über seine gesamte Länge um den elektrisch leitfähigen Kern des Anschlusskabels gecrimpt. Das Anschlusselement ist dann insgesamt als Crimp ausgeführt und besteht nur aus dem gecrimpten Bereich, was im Hinblick auf die Materialersparnis vorteilhaft ist. Das Anschlusselement kann aber neben dem um den elektrisch leitfähigen Kern gecrimpten Abschnitt (dem sogenannten Drahtcrimp oder Adercrimp) einen oder mehrere weitere Abschnitte aufweisen. Ein solcher weiterer Abschnitt kann beispielweise um die isolierende Ummantelung des Anschlusskabels gecrimpt sein (Isolationscrimp), wodurch eine stabilere Verbindung zwischen Anschlusselement und Anschlusskabel erreicht werden kann. Das Anschlusselement kann auch beispielsweise kurze Endabschnitte aufweisen, welche nicht von der Crimpung betroffen sind.

Der gecrimpte Bereich des Anschlusselements ist über die Lotmasse mit der elektrisch leitfähigen Struktur verbunden. Gemeint ist hier eine direkte, mechanische Verbindung zwischen dem gecrimpten Bereich des Anschlusselements und der elektrisch leitfähigen Struktur über die Lotmasse. Das bedeutet, dass Lotmasse zwischen dem Crimp und der elektrisch leitfähigen Struktur angeordnet ist und dadurch den Crimp dauerhaft stabil auf der elektrisch leitfähigen Struktur fixiert.

Bevorzugt steht die Lotmasse nicht in direktem Kontakt zum elektrisch leitfähigen Kern des Anschlusskabels.

Crimpverbindungen werden üblicherweise anhand ihres Querschnitts senkrecht zur Ausdehnungsrichtung des Anschlusskabels charakterisiert. Die Form der Crimpung wird durch die Wahl des Crimpwerkzeugs bestimmt. Eine der Wirkstellen des Crimpwerkzeugs kann eine charakteristische Quetschstruktur erzeugen, wobei der Quetschstruktur gegenüberliegend typischerweise der sogenannte Crimpboden angeordnet ist. Die Form der Crimpung wird nach der charakteristischen Quetschstruktur benannt. Die bevorzugte Crimp-Form im Rahmen der vorliegenden Erfindung ist der sogenannte B-Crimp. Die beiden herumgebogenen Seitenkanten werden gleichsam in das Anschlusskabel hineingesteckt, so dass sich die Form zweier Bögen ergibt, die einem bevorzugt planen Crimpboden gegenüberliegen, so dass sich die namensgebende Form des Buchstaben "B" ergibt.

Die geometrischen Abmessungen des Crimps (Crimphöhe, Crimpbreite, Crimplänge) können vom unter Berücksichtigung des Durchmessers des Anschlusskabels sowie gängiger Normen geeignet gewählt werden.

Das Anschlusselement wird über den Crimpboden auf die elektrisch leitfähige Struktur angelötet, so dass die charakteristische Quetschstruktur von Substrat und Lotmasse abgewandt ist. Durch die in das Anschlusskabel eingesteckten Seitenkanten des Anschlusselements wird die erforderliche zentrale Vertiefung ausgebildet, in welche die Lötspitze teilweise eingeführte werden kann. Die Bögen der B-Form bilden die umgebenden erhöhten Bereiche, die mit der Lötspitze in Kontakt kommen. In diesem Fall erstreckt sich die mittige Vertiefung über die gesamte Crimplänge zwischen zwei gegenüberliegenden Seitenkanten des Anschlusselements, während sie beidseitig von den angrenzenden erhöhten Bereichen umgeben wird.

Die Erfindung ist nicht auf bestimmte Materialien des Anschlusselements beschränkt. Typische Anschlusselemente bestehen aus Kupfer, was eine hohe elektrische Leitfähigkeit gewährleistet. Das Anschlusselement kann aber auch aus anderen Materialien gefertigt sein, die hinsichtlich ihres thermischen Ausdehnungskoeffizienten besser an das Substrat angepasst sind, beispielsweise Titan oder Edelstahl, wenn das Substrat aus Glas besteht. So können thermische Spannungen während des Lötens verringert werden. Der Unterschied der thermischen Ausdehnungskoeffizienten von Substrat und Anschlusselement betragen in einer bevorzugten Ausgestaltung kleiner 5 x 10⁻⁶/°C.

Typische Materialstärken des Anschlusselements betragen von 0,1 mm bis 4 mm, bevorzugt von 0,3 mm und 1 mm. Die Länge und Breite des Anschlusselements beträgt beispielsweise von 5 mm bis 30 mm.

Die Erfindung ist nicht auf die Verwendung einer bestimmten Lotmasse beschränkt, sondern lässt sich mit allen Lotmassen durchführen. Die Erfindung ist gleichermaßen für klassische bleihaltige Lotmassen geeignet wie für bleifreie Lotmassen, die immer höhere Bedeutung erlangen, insbesondere auch im Fahrzeugbereich. Die Schichtdicke der Lotmasse ist bevorzugt kleiner oder gleich 0,6 mm.

Die Lotmasse kann auf der leitfähigen Struktur platziert werden und anschließend das Anschlusselement auf der Lotmasse angeordnet werden. In einer bevorzugten Ausführung wird allerdings das Anschlusselement zunächst mit der Lotmasse versehen und zusammen mit der Lotmasse auf der leitfähigen Struktur angeordnet. Dies hat verfahrenstechnische Vorteile, weil die Anschlusselemente mit der portionierten Lotmasse in großer Stückzahl vorbereitet werden können. Die Lotmasse wird bevorzugt als Plättchen oder abgeflachter Tropfen mit festgelegter Schichtdicke, Volumen und Form auf dem Anschlusselement angebracht. Die Schichtdicke des Lotmasseplättchens beträgt bevorzugt kleiner oder gleich 0,6 mm. Die Form des Lotmasseplättchens richtet sich bevorzugt nach der Form der Kontaktfläche des Anschlusselementes.

Die verbesserte Lötspitze findet insbesondere Verwendung zum Anlöten eines elektrischen Anschlusselements auf eine elektrische leitfähige Struktur auf einem Substrat, bevorzugt einer Fensterscheibe, insbesondere einer Fahrzeugscheibe mit Heiz- oder Antennenfunktion.

Eine erfindungsgemäß hergestellte Scheibe findet Verwendung in Gebäuden oder in Fortbewegungsmitteln für den Verkehr auf dem Lande, in der Luft oder zu Wasser, insbesondere in Schienenfahrzeugen oder Kraftfahrzeugen, bevorzugt als Windschutzscheibe, Heckscheibe, Seitenscheibe und/oder Dachscheibe, insbesondere als beheizbare Scheibe oder als Scheibe mit Antennenfunktion.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine perspektivische Darstellung einer Ausgestaltung der verbesserten Lötspitze,
- Fig. 2: einen Querschnitt durch die Lötspitze gemäß Figur 1,
- Fig. 3: einen Querschnitt durch die weitere Ausgestaltung der verbesserten Lötspitze,
- Fig. 4: eine Lötstation unter Verwendung der Lötspitze gemäß Figur 1,
- Fig. 5: einen Querschnitt durch ein bevorzugtes Anschlusselement zum Verlöten mit der verbesserten Lötspitze,
- Fig. 6: einen Querschnitt durch eine Scheibe mit dem Anschlusselement gemäß Figur 5 während des erfindungsgemäßen Verfahrens,
- Fig. 7: einen Querschnitt durch eine Scheibe mit einem weiteren bevorzugten Anschlusselement während des erfindungsgemäßen Verfahrens und
- Fig. 8: ein Flussdiagramm einer Ausführung des erfindungsgemäßen Verfahrens.

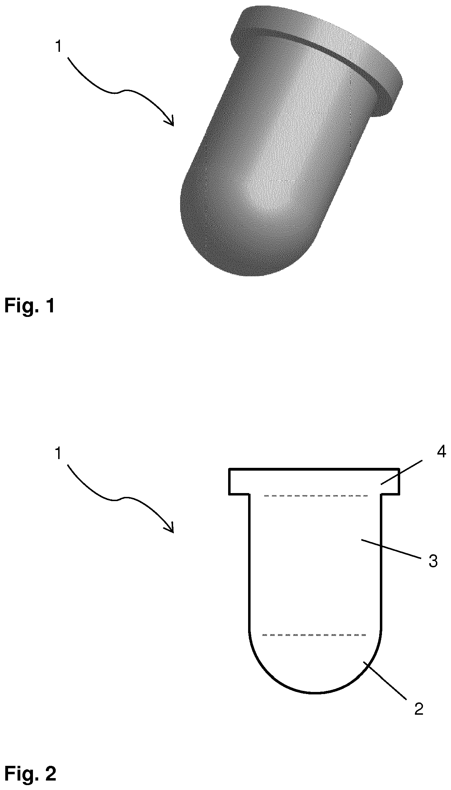

Fig. 1 und Fig. 2 zeigen je ein Detail einer Ausgestaltung der verbesserten Lötspitze 1 für einen Lötkolben, insbesondere Handlötkolben. Die Lötspitze ist einstückig ausgebildet, kann aber gedanklich in drei Abschnitte aufgeteilt werden: einen Endabschnitt 2, einen Mittelabschnitt 3 und einen Anschlussabschnitt 4.

Der Endabschnitt 2 dient zur Kontaktierung des Lötgutes während des Lötens. Der Endabschnitt 2 ist erfindungsgemäß in Form einer Halbkugel ausgebildet.

Der Mittelabschnitt 3 schließt sich an den Endabschnitt 2 an. Der Mittelabschnitt 3 ist in Form eines senkrechten Kreiszylinders ausgebildet mit demselben Radius wie die Halbkugelform des Endabschnitts 2.

Der Anschlussabschnitt 4 schließt sich an den Mittelabschnitt 3 an. Der Anschlussabschnitt 4 ist ebenfalls in Form eines senkrechten Kreiszylinders ausgebildet. Der Anschlussabschnitt 4 ist aber gegenüber dem Mittelabschnitt 3 verbreitert, weist also einen größeren Radius auf. Der Anschlussabschnitt 4 bildet somit eine Art Vorsprung. Der Endabschnitt 4 dient zur Verbindung der Lötspitze 1 mit dem bestimmungsgemäßen

Lötkolben. Die vom Mittelabschnitt 3 abgewandte Oberfläche des Anschlussabschnitts 4 ist plan und kreisförmig ausgebildet und kann flanschartig mit einer entsprechenden Anschlussfläche des Lötkolbens verbunden werden. Die Verbindungsoberfläche des Lötkolbens weist dazu bevorzugt die gleiche Form und Größe auf wie die Oberfläche des Anschlussabschnitts 4, ist also im Wesentlichen kongruent ausgebildet. Die Verbindung erfolgt bevorzugt mit einer Überwurfmutter, die den Endabschnitt 4 an den Lötkolben anpresst und dort mittels eines Gewindes fixiert ist. Alternativ ist es beispielsweise auch möglich, den Endabschnitt 4 mittels durch den Vorsprung hindurch geführten Schrauben am Lötkolben zu befestigen.

In dieser Ausführungsform beträgt die Länge des Mittelabschnitts 3 bevorzugt von 5 mm bis 80 mm, insbesondere von 10 mm bis 50 mm. Die Länge des Anschlussabschnitts 4 beträgt bevorzugt von 1 mm bis 10 mm, insbesondere von 1 mm bis 5 mm.

Die Halbkugelform des Endabschnitts 2 weist beispielsweise einen Radius von 4 mm auf, ebenso wie die Zylinderform des Mittelabschnitts 3. Der Mittelabschnitt 3 weist beispielsweise eine Länge von 43 mm auf. Der Anschlussabschnitt 4 weist beispielsweise eine Länge von 3 mm auf und die Zylinderform des Anschlussabschnitts 4 einen Radius von beispielsweise 6 mm. Damit ergibt sich eine Gesamtlänge der Lötspitze 1 von 50 mm.

Die Lötspitze 1 besteht aus Kupfer, wodurch eine gute Wärmeleitfähigkeit gewährleistet wird. Die Lötspitze 1 ist hartverchromt - sie ist mit einer einzelnen Schicht aus Chrom mit einer Dicke von etwa 30 µm beschichtet. Dadurch wird die Oberflächenhärte erhöht und Verschleiß reduziert. Außerdem kann Lotmasse nicht an der Lötspitze 1 anhaften, wie es bei Verwendung von nicht hartverchromten Kupfer unerwünschterweise der Fall ist. Beim Entfernen der Lötspitze 1 nach dem Löten wird dadurch die Gefahr verringert, dass die Lötverbindung durch anhaftende Lotmasse beschädigt wird.

Die Lötspitze 1 kann alternativ auch vernickelt sein oder andere Beschichtungen aufweisen. Die haftenden Eigenschaften werden hierdurch beeinflusst.

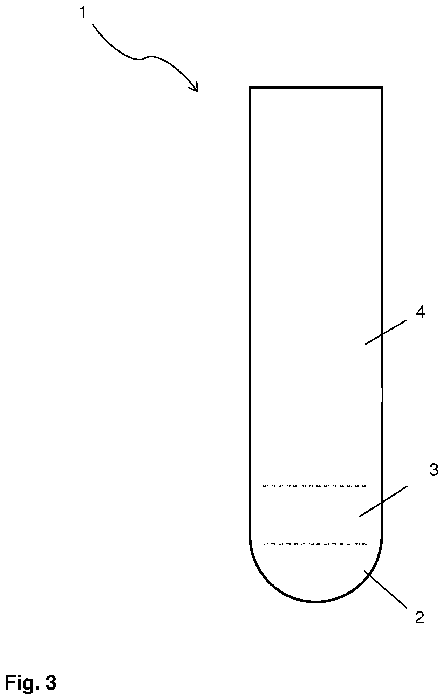

Fig. 3 zeigt eine weitere Ausgestaltung der verbesserten Lötspitze 1, die mittels einer Steckverbindung mit dem Lötkolben verbunden wird. Hierzu wird der Anschlussabschnitt 4 in eine entsprechende Aufnahme des Lötkolbens eingesteckt und beispielsweise mit einer seitlich eingeführten Schraube fixiert. Der Anschlussabschnitt 4 und der Mittelabschnitt 3 weisen die gleichen Abmessungen und den gleichen Querschnitt auf. Mittelabschnitt 3 und Anschlussabschnitt 4 bilden also ein kontinuierlichen, zylinderförmigen Ansatz an den halbkugelförmigen Endabschnitt 2, der nur dadurch gedanklich in den Mittelabschnitt 3 und den Anschlussabschnitt 4 unterteilt ist, dass der Anschlussabschnitt in den Lötkolben eingeführt wird und der Mittelabschnitt im montierten Zustand aus dem Lotkolben hervorsteht,

In dieser Ausführungsform beträgt die Länge des Mittelabschnitts 3 bevorzugt von 1 mm bis 50 mm, insbesondere von 3 mm bis 20 mm. Die Länge des Anschlussabschnitts 4 beträgt bevorzugt von 10 mm bis 100 mm, insbesondere von 20 mm bis 80 mm.

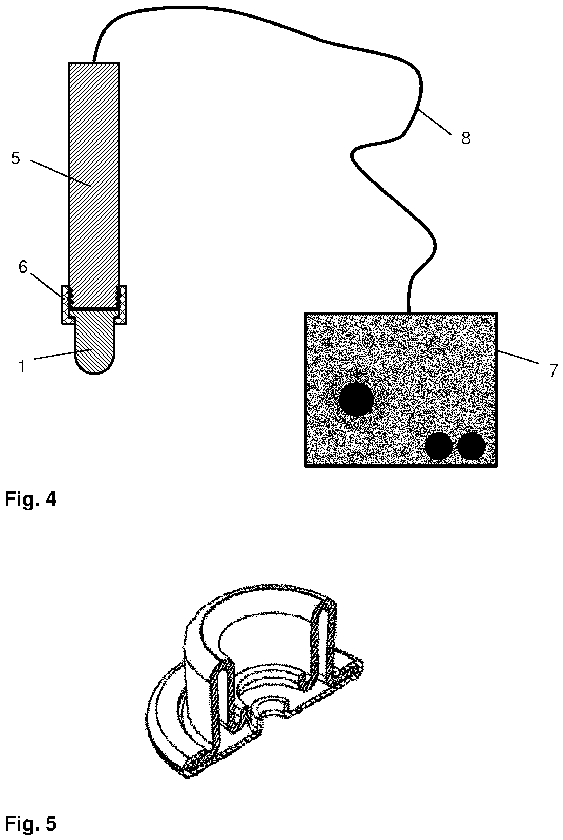

Fig. 4 zeigt eine Lötstation unter Verwendung der verbesserten Lötspitze 1. Die Lötspitze 1 ist auf einem herkömmlichen Handlötkolben 5 montiert. Dazu ist der Anschlussabschnitt 4 auf einer kongruenten Verbindungsfläche des Lötkolbens 5 angeordnet. Die Lötspitze 1 ist dort mittels einer Überwurfmutter 6 fixiert, die auf ein Gewinde des Lötkolbens 5 aufgeschraubt ist. Der Lötkolben 5 ist mit einer Heizpatrone ausgestattet, um die Lötspitze 1 auf die zum Löten erforderliche Temperatur zu erhitzen. Der Lötkolben 4 ist über ein elektrisches Kabel 8 mit einer Steuerungseinheit 7 verbunden, mit der die Heizfunktion aktiviert und deaktiviert werden kann und mit der die Heizleistung reguliert werden kann. Die Steuerungseinheit 7 ist ihrerseits durch ein nicht dargestelltes Kabel mit einer Spannungsquelle verbunden.

Die verbesserte Lötspitze 1 kann prinzipiell mit jedem verfügbaren Lötkolben 5 verwendet werden. Es muss lediglich der Anschlussbereich 4 der Lötspitze 1 auf den jeweiligen Lötkolben 5 angepasst werden, damit die Lötspitze 1 am Lötkolben 5 montierbar ist.

Alternativ zur dargestellten regelbaren Lötstation ist es ebenso möglich, die Lötspitze 1 an einem nicht-regelbaren Lötkolben zu verwenden, dessen Heizleistung nicht vom Benutzer eingestellt werden kann.

Fig. 5 zeigt einen Querschnitt durch ein bevorzugt mit der verbesserten Lötspitze 1 zu verlötendes elektrisches Anschlusselement in perspektivischer Darstellung. Das Anschlusselement ist als männlicher Druckknopf ausgebildet. Der Druckknopf ist im Wesentlichen in der Art eines Hohlzylinders ausgestaltet, weist also in Draufsicht eine zentrale Vertiefung auf, die umlaufend von einem runden erhöhten Bereich umgeben ist.

Das Anschlusselement ist beispielsweise aus Kupfer oder Edelstahl gefertigt. Das Anschlusselement kann Beschichtungen aufweisen, beispielsweise eine Silberbeschichtung um die elektrische Leitfähigkeit zu verbessern. Die Materialstärke beträgt beispielsweise etwa 0,3 mm. Die runde Lötfläche auf der Unterseite des Anschlusselements hat beispielsweise einen Durchmesser von etwa 8 mm. Der den eigentlichen Druckknopf bildende Hohlzylinder weist beispielsweise einen inneren Durchmesser von etwa 3 mm auf, einen äußeren Durchmesser von etwa 5,7 mm und eine Höhe von etwa 3,5 mm.

Das Anschlusselement ist dafür vorgesehen und geeignet, mit einem nicht dargestellten weiblichen Druckknopf durch Aufstecken verbunden zu werden. An den weiblichen Druckknopf ist ein Anschlusskabel angeschlossen. So kann am Einsatzort sehr einfach und komfortabel eine elektrische Verbindung zwischen dem Anschlusselement und einer externen Spannungsquelle bereitgestellt werden.

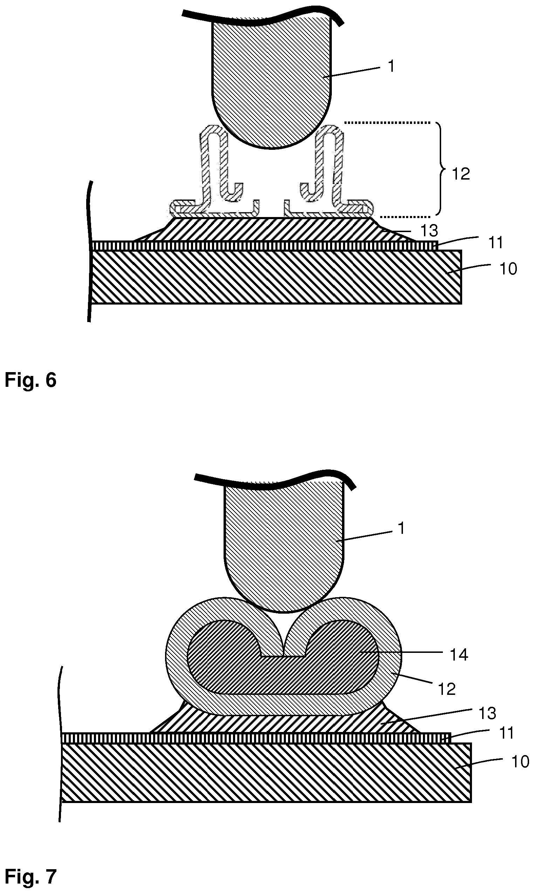

Fig. 6 zeigt einen Querschnitt durch eine Scheibe mit dem elektrischen Anschlusselement 12 aus Figur 5 während des erfindungsgemäßen Lötvorgangs. Die Scheibe ist beispielsweise eine Heckscheibe eines PKWs und umfasst ein Substrat 1, welches ein 3 mm dickes thermisch vorgespanntes Einscheibensicherheitsglas aus Kalk-Natron-Glas ist. Auf das Substrat 10 ist eine elektrisch leitfähige Struktur 11 in Form einer Heizleiterstruktur aufgedruckt. Die elektrisch leitfähige Struktur 11 enthält Silberpartikel und Glasfritten. Im Randbereich der Scheibe ist die elektrisch leitfähige Struktur 11 auf eine Breite von etwa 10 mm verbreitert und bildet eine Kontaktfläche für das elektrische Anschlusselement 12. Das Anschlusselement 12 dient der elektrischen Kontaktierung der elektrisch leitfähigen Struktur 11 mit einer externen Spannungsversorgung über ein nicht dargestelltes Anschlusskabel. Die elektrische Kontaktierung ist für einen Betrachter außerhalb des PKWs durch einen Abdecksiebdruck zwischen elektrisch leitfähiger Struktur 11 und Substrat 10 verborgen.

Das Anschlusselement 12 soll über eine Lotmasse 13 mit der elektrisch leitfähigen Struktur 11 verbunden werden. Dazu wird die Lotmasse 13 zwischen leitfähige Struktur 11 und Anschlusselement 12 angeordnet und mittels der Lötspitze 1 aufgeschmolzen. Die Lötspitze 1 wird dazu mit dem Anschlusselement 12 in Kontakt gebracht, über welches die erforderliche Wärmeenergie in die Lotmasse 13 eingeleitet wird. Der Endabschnitt 2 der Lötspitze 1 ist teilweise in die zentrale Vertiefung des Anschlusselements 12 eingeführt. Da die Lötspitze 1 einen größeren Durchmesser aufweist als die Vertiefung, ist die Lötspitze 1 nicht vollständig in die Vertiefung eingeführt. Stattdessen steht der Randbereich des Endabschnitts 2 der Lötspitze 1 mit den die Vertiefung umgebenden Bereichen des Anschlusselements, das heißt in diesem Fall dem oberen Rand des den Druckknopf bildenden Hohlzylinders, in Kontakt. Natürlich muss die Vertiefung eine vom Radius des Endabschnitts der Lötspitze 1 abhängige Mindesttiefe aufweisen, damit die Lötspitze ausreichend abgesenkt werden kann, um den gewünschten Kontakt zwischen Lötspitze 1 und Anschlusselement 12 herzustellen.

Aus der Abbildung ist der Vorteil der verbesserten Lötspitze 1 sofort ersichtlich. Aufgrund der Halbkugelform des Endabschnitts 2 wird der dargestellte Kontakt zwischen Lötspitze 1 und Anschlusselement 12 unabhängig vom Anstellwinkel der Lötspitze 1 gegenüber dem Substrat 10 immer erreicht. Beim Handlöten muss der Techniker als nicht darauf achten, einen genauen Anstellwinkel einzuhalten und beispielsweise den Lötkolben immer exakt senkrecht zum Substrat 10 zu halten. Das erleichtert das Handlöten erheblich. Darüber hinaus wird die Energie über die kreisrunde Kontaktfläche sehr homogen in die Lotmasse 13 eingeleitet, zu deren Aufschmelzen folglich weniger Energie nötig ist als bei einem punktuellen, dezentralen Energieeintrag. Die Lotmasse 13 wird daher insgesamt weniger stark erhitzt und verfestigt nach Ende der Energiezufuhr schneller, so dass eine unerwünschte Verschiebung des Anschlusselements 12 auf der noch flüssigen Lotmasse 13 auch ohne weitere fixierende Maßnahmen vermieden werden kann. Die Positionstreue des Anschlusselements 12 auf dem Substrat 10 kann somit gesteigert, die Fertigungstoleranzen reduziert werden. Das sind große Vorteile der vorliegenden Erfindung.

Fig. 7 zeigt einen Querschnitt durch eine Scheibe mit einer alternativen bevorzugten Ausgestaltung des elektrischen Anschlusselements 12 während des erfindungsgemäßen Lötvorgangs. Das Anschlusselement 12 ist als sogenannter B-Crimp ausgebildet- es besteht aus einem Metallplättchen mit einer Materialstärke von beispielsweise 0,4 mm, beispielsweise Kupferplättchen oder Edelstahlplättchen, dass um einen Endabschnitt eines Anschlusskabels 14 herumgebogen und durch Quetschen (Crimpen) dauerhaft stabil mit dem Anschlusskabel 14 verbunden wurde. Die Bezeichnung "B-Crimp" resultiert aus der charakteristischen Form des Anschlusselements 12, die sich aus dem Einstecken der herumgebogenen Seitenkanten des Anschlusselements 12 in das Anschlusskabel 14 ergibt. Die charakteristische Quetschform zeigt im Profil zwei abgerundete Strukturen (Bögen) nach
Art des Buchstabens "B" Das Anschlusskabel 14 ist als Drahtlitzenleiter ausgeführt, dessen Einzellitzen gleichmäßig auf beide Seiten des Kontaktinnenraums ausweichen, was zu einer vorteilhaften Stabilität und Gasdichtheit des Crimpkontakts führt. Der Crimpboden bildet die Kontaktfläche zur Lotmasse 13 aus, während die charakteristische Quetschstruktur in Form eines Doppelbogens vom Substrat 10 abgewandt ist. Die charakteristische Quetschstruktur bildet eine zentrale Vertiefung aus, in welche der Endabschnitt 2 der Lötspitze 1 teilweise eingeführt ist. Die Lötspitze 1 kommt so mit den die Vertiefung umgebenden Bereichen auf den beiden Bögen in Kontakt.

Die Vertiefung des Anschlusselements 12 ist in dieser Ausgestaltung nicht umlaufend von angrenzenden Bereichen umgeben, sondern erstreckt sich über die gesamte Länge des Anschlusselements 12. Die Vertiefung ist von zwei Seiten durch die erhöhten Bögen begrenzt.

Die Länge des Anschlusselements 12 beträgt beispielsweise 4,5 mm (Crimplänge), die Breite (Crimpbreite) etwa 2,5 mm und die Höhe etwa 1,5 mm (Crimphöhe).

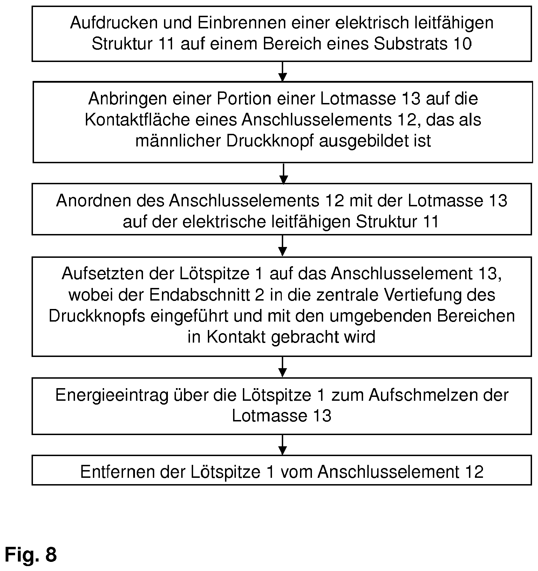

Fig. 8 zeigt ein Ausführungsbeispiel des erfindungsgemäßen Verfahrens zur Herstellung einer Scheibe mit elektrischen Anschlusselement 12 unter Verwendung der verbesserten Lötspitze 1.

### Beispiele

Es wurden Anschlusselemente in Form von Druckknöpfen (Fig. 5, Fig. 6) mit einem Handlötkolben mit einem Silberdruck auf einer Glasscheibe verlöten, zum einen unter Verwendung einer verbesserten Lötspitze und zum anderen unter Verwendung eines herkömmlichen Lötmeisels. Die erfindungsgemäß verlöteten Anschlusselemente wiesen zu 100% eine stabile Lötverbindung auf, während die herkömmlich verlöteten Anschlusselemente nicht auf dem Silberdruck hielten (0% stabile Lötverbindung). Der Grund hierfür liegt in der geringen Kontaktfläche zwischen der herkömmlichen Meiselform und dem Druckknopf, wodurch ein geringer Energieeintrag bewirkt wurde. Die verbesserte halbkugelförmige Lötspitze bewirkt dagegen einen effizienten Energieeintrag, wodurch die Lotmasse wirksam aufgeschmolzen und das Anschlusselement stabil angelötet wird.

Außerdem wurden Anschlusselemente in Form eines B-Crimps (Fig. 7) mit einem Handlötkolben mit einem Silberdruck auf einer Glasscheibe verlöten, zum einen unter Verwendung einer verbesserten Lötspitze und zum anderen unter Verwendung eines herkömmlichen Lötmeisels. Die erfindungsgemäß verlöteten Anschlusselemente wiesen zu 100% eine saubere Lötverbindung auf. Dagegen wurde bei den herkömmlich verlöteten Anschlusselementen in etwa 50% der Fälle ein unkontrolliertes Ausfließen der Lotmasse beobachtet, wodurch die Lotmasse teilweise unerwünscht in Kontakt zum leitfähigen Kern des Anschlusskabels innerhalb des Crimps kam. Der Grund liegt im deutlich homogeneren Energieeintrag durch die verbesserte Lötspitze, wodurch die Lotmasse kontrollierter aufgeschmolzen wird.

### Bezugszeichenliste

(1) Lötspitze
(2) Endabschnitt der Lötspitze 1
(3) Mittelabschnitt der Lötspitze 1
(4) Anschlussabschnitt der Lötspitze 1
(5) Handlötkolben
(6) Überwurfmutter
(7) Steuerungseinheit
(8) Kabel zwischen Handlötkolben 5 und Steuerungseinheit 6
(10) Substrat
(11) elektrisch leitfähige Struktur
(12) elektrisches Anschlusselement
(13) Lotmasse
(14) Anschlusskabel des Anschlusselements 12

## Patentansprüche

1. Verfahren zur Herstellung einer Scheibe mit einem elektrischen Anschlusselement, umfassend
(a) Bereitstellen eines Substrats (10),
(b) Aufbringen einer elektrisch leitfähigen Struktur (11) auf einen Bereich des Substrats (10),
(c) Anordnen einer Lotmasse (13) auf einem Bereich der elektrisch leitfähigen Struktur (11) und eines elektrischen Anschlusselements (12) auf der Lotmasse (13),
(d) Anlöten des Anschlusselements (12) mit einem Lötkolben (5) mit einer Lötspitze (1), **dadurch gekennzeichnet, dass**
die Lötspitze einen Endabschnitt (2) umfasst, der im Wesentlichen halbkugelförmig ausgebildet ist.

2. Verfahren nach Anspruch 1, wobei der Lötkolben (5) ein Handlötkolben ist, mit dem das Anschlusselement (12) manuell angelötet wird.

3. Verfahren nach Anspruch 1 oder 2, wobei das Substrat (10) Glas enthält, bevorzugt Kalk-Natron-Glas, und wobei die elektrisch leitfähige Struktur (11) als eingebrannte Druckpaste ausgebildet ist, die Silberpartikel enthält, oder als elektrisch leitfähige Folie.

4. Verfahren nach einem der Ansprüche 1 bis 3, wobei das Anschlusselement (12) eine zentrale Vertiefung aufweist, in die der Endabschnitt (2) der Lötspitze (1) teilweise eingeführt wird, um die Lötspitze (1) mit den die Vertiefung umgebenden Bereichen des Anschlusselements (12) in Kontakt zu bringen.

5. Verfahren nach Anspruch 4, wobei das Anschlusselement (12) als männlicher Druckknopf ausgebildet ist.

6. Verfahren nach Anspruch 4, wobei das Anschlusselement (12) als B-Crimp um ein Anschlusskabel (14) ausgebildet ist.

7. Verfahren nach einem der Ansprüche 1 bis 6, wobei außer dem Anpressdruck der Lötspitze (1) keine weiteren Maßnahmen zur Fixierung des Anschlusselements (12) getroffen werden.

8. Verfahren nach einem der Ansprüche 1 bis 7, wobei die Lötspitze den Endabschnitt (2), einen Anschlussabschnitt (4) und einen sich dazwischen erstreckenden, im Wesentlichen zylinderförmig ausgebildeten Mittelabschnitt (3) umfasst, wobei der Anschlussabschnitt (4) gegenüber dem Mittelabschnitt (3) verbreitert ist zur Befestigung an dem Lötkolben (5) mittels einer Überwurfmutter (6).

9. Verfahren nach einem der Ansprüche 1 bis 7, wobei die Lötspitze den Endabschnitt (2), einen Anschlussabschnitt (4) und einen sich dazwischen erstreckenden, im Wesentlichen zylinderförmig ausgebildeten Mittelabschnitt (3) umfasst, wobei der Anschlussabschnitt (4) geeignet ist, zur Befestigung in den Lötkolben (5) eingeführt zu werden.

10. Verfahren nach einem der Ansprüche 1 bis 9, wobei die Lötspitze Kupfer enthält.

11. Verfahren nach einem der Ansprüche 1 bis 10, wobei die Lötspitze vernickelt ist.

12. Verfahren nach einem der Ansprüche 1 bis 10, wobei die Lötspitze hartverchromt ist.

13. Verfahren nach einem der Ansprüche 1 bis 12, wobei das Substrat (10) eine Fensterscheibe, insbesondere eine Fahrzeugscheibe mit Heiz- oder Antennenfunktion ist.

## Claims

1. Method for producing a pane with an electrical connection element, comprising
(a) providing a substrate (10),
(b) applying an electrically conductive structure (11) on a region of the substrate (10),
(c) arranging a soldering compound (13) on a region of the electrically conductive structure (11) and an electrical connection element (12) on the soldering compound (13),
(d) soldering the connection element (12) with a soldering iron (5) having a soldering tip (1),
**characterized in that**, the soldering tip comprises a substantially hemispherical end portion (2).

2. Method according to claim 1, wherein the soldering iron (5) is a hand-held soldering iron, with which the connection element (12) is hand soldered.

3. Method according to claim 1 or 2, wherein the substrate (10) contains glass, preferably soda lime glass, and wherein the electrically conductive structure (11) is implemented as a fired printing paste containing silver particles or as an electrically conductive foil.

4. Method according to one of claims 1 through 3, wherein the connection element (12) has a central depression, into which the end portion (2) of the soldering tip (1) is partially inserted in order to bring the soldering tip (1) into contact with the areas of the connection element (12) surrounding the depression.

5. Method according to claim 4, wherein the connection element (12) is implemented as a male snap.

6. Method according to claim 4, wherein the connection element (12) is implemented as a B crimp around a connection cable (14).

7. Method according to one of claims 1 through 6, wherein other than the contact pressure of the soldering tip (1), no further measures are taken for securing the connection element (12).

8. Method according to one of claims 1 through 7, wherein the soldering tip comprises the end portion (2), a connection portion (4), and, extending therebetween, a substantially cylindrical middle portion (3), wherein the connection portion (4) is widened compared to the middle portion (3) for securing on the soldering iron (5) by means of a union nut (6).

9. Method according to one of claims 1 through 7, wherein the soldering tip comprises the end portion (2), a connection portion (4), and, extending therebetween, a substantially cylindrical middle portion (3), wherein the connection portion (4) is suitable for being inserted for securing in the soldering iron (5).

10. Method according to one of claims 1 through 9, wherein the soldering tip contains copper.

11. Method according to one of claims 1 through 10, wherein the soldering tip is nickel plated.

12. Method according to one of claims 1 through 10, wherein the soldering tip is hard chrome plated.

13. Method according to one of claims 1 through 12, wherein the substrate (10) is a window pane, in particular a vehicle pane with a heating or antenna function.

## Revendications

1. Procédé de fabrication d'une vitre avec un élément de raccordement électrique, comportant :
(a) se procurer un substrat (10) ;
(b) appliquer une structure conductrice de l'électricité (11) sur une région du substrat (10) ;
(c) disposer une masse de brasure (13) sur une région de la structure conductrice de l'électricité (11) et un élément de raccordement électrique (12) sur la masse de brasure (13) ;
(d) braser l'élément de raccordement (12) avec un fer à braser (5) ayant une panne (1) ;
**caractérisé par le fait que**
la panne comporte une partie d'extrémité (2) qui est conçue sensiblement hémisphérique.

2. Procédé selon la revendication 1, dans lequel le fer à braser (5) est un fer à braser manuel avec lequel l'élément de raccordement (12) est brasé manuellement.

3. Procédé selon l'une des revendications 1 ou 2, dans lequel le substrat (10) contient du verre, de préférence du verre sodocalcique, et dans lequel la structure conductrice de l'électricité (11) est formée en tant que pâte d'impression cuite qui contient des particules d'argent ou en tant film conducteur de l'électricité.

4. Procédé selon l'une des revendications 1 à 3, dans lequel l'élément de raccordement (12) présente un creux central dans lequel la partie d'extrémité (2) de la panne (1) est partiellement introduite pour amener en contact la panne (1) avec les régions de l'élément de raccordement (12) entourant le creux.

5. Procédé selon la revendication 4, dans lequel l'élément de raccordement (12) est formé en tant que bouton-pression mâle.

6. Procédé selon la revendication 4, dans lequel l'élément de raccordement (12) est formé en tant que sertissage en B autour d'un câble de raccordement (14).

7. Procédé selon l'une des revendications 1 à 6, dans lequel, en dehors de la pression d'appui de la panne (1), il n'est pas pris d'autres mesures pour la fixation de l'élément de raccordement (12).

8. Procédé selon l'une des revendications 1 à 7, dans lequel la panne comporte la partie d'extrémité (2), une partie de raccordement (4) et une partie intermédiaire (3) agencée sensiblement de forme cylindrique, s'étendant entre celles-ci, la partie de raccordement (4) étant élargie par rapport à la partie intermédiaire (3) pour la fixation sur le fer à braser (5) au moyen d'un écrou d'accouplement (6).

9. Procédé selon l'une des revendications 1 à 7, dans lequel la panne comporte la partie d'extrémité (2), une partie de raccordement (4) et une partie intermédiaire (3) agencée sensiblement de forme cylindrique, s'étendant entre celles-ci, la partie de raccordement (4) étant apte à être introduite dans le fer à braser (5) pour la fixation.

10. Procédé selon l'une des revendications 1 à 9, dans lequel la panne contient du cuivre.

11. Procédé selon l'une des revendications 1 à 10, dans lequel la panne est nickelée.

12. Procédé selon l'une des revendications 1 à 10, dans lequel la panne est chromée dur.

13. Procédé selon l'une des revendications 1 à 12, dans lequel le substrat (10) est une vitre de fenêtre, en particulier une vitre de véhicule avec fonction chauffage ou antenne.
